# EUROPEAN PATENT SPECIFICATION

(11) **EP 3 760 601 B1**
(45) Date of publication and mention of the grant of the patent: **11.11.2026**
(21) Application number: 18913901.7
(22) Date of filing: 04.04.2018
(51) Int. Cl.: C04B 7/36, B02C 15/08, F27B 7/32, F27D 3/00, F27D 3/08, F27D 3/10

(54) **SORTING DEVICE**
SORTIERVORRICHTUNG
DISPOSITIF DE TRI

(43) Date of publication of application: 06.01.2021
(73) Proprietor: Taiheiyo Engineering Corporation, Tokyo 135-0042 (JP); Taiheiyo Cement Corporation, Tokyo 112-8503 (JP)
(72) Inventor: YAMAMOTO, Yasushi, Tokyo 135-0042 (JP); MAEDA, Yoshiaki, Tokyo 135-0042 (JP); YAMAGUCHI, Kazuhiko, Tokyo 135-0042 (JP); MOTOYOSHI, Kunio, Tokyo 135-0042 (JP); KIMURA, Takayuki, Sakura-shi, Chiba 285-8655 (JP); KAMADA, Kouji, Sakura-shi, Chiba 285-8655 (JP); IZUMI, Kazushi, Sakura-shi, Chiba 285-8655 (JP); UENO, Naoki, Sakura-shi, Chiba 285-8655 (JP)
(74) Representative: Isarpatent
(86) International application number: PCT/JP2018/014388
(87) International publication number: WO 2019/193672

(56) References cited:
- WO-A1-93/01889
- JP-A- H07 328 467
- JP-A- H09 278 501

## Description

### TECHNICAL FIELD

The present invention relates to a fractionating device for fractionating powders such as cement raw materials that are discharged from preheater cyclones of a cement burning apparatus.

### BACKGROUND ART

A cement burning apparatus is provided with a preheater, a calciner, a cement kiln and a clinker cooler, and a cement raw material fed to the preheater is preheated through preheater cyclones arranged in stages; calcined in the calciner; and burned in the cement kiln to generate cement clinker. Then, the cement clinker is cooled in the clinker cooler, and is sent to a cement grinding process.

In the above preheater cyclones, a cement raw material is preheated while gradually moves from upper cyclones to lower cyclones. A part of the cement material is sometimes fractionated from an outlet chute of a cyclone to prevent coating on cement manufacturing facility (refer to Patent Document 1), or to recover mercury in a cement kiln exhaust gas (refer to Patent Document 2), or to separate metal tips from fractured glass in a fluorescent-tube digester (refer to Patent Document 3) .

### PRIOR ART DOCUMENTS

### PATENT DOCUMENTS

Patent Document 1: Japanese Patent publication No. 2004-168605 gazette
Patent Document 2: Japanese Patent publication No. 2014-58699 gazette
Patent Document 3: WO9301889A1

### OUTLINE OF THE INVENTION

### PROBLEMS TO BE SOLVED BY THE INVENTION

A part of the cement raw material falling in the outlet chute of the preheater cyclone sometimes becomes a large block due to aggregation, in such a case, the fractionating device may be damaged, or the large block cannot be received, which may prevent desired fractionating.

In addition, the cement raw material falling in the chute is remarkably high in fluidity, which may cause flushing in the fractionating device to fractionate a cement raw material exceeding desired amount.

Further, the cement raw material in the chute does not drop through a fixed route, so that the fractionating device cannot receive the cement raw material sufficiently, which may prevent desired fractionating.

The present invention has been made in consideration of the problems in the conventional art, and the object thereof is to provide a device capable of stably fractionating powders such as cement raw materials by a simple configuration.

### MEANS OF SOLVING THE PROBLEMS

In order to attain the above object, a fractionating device of the present invention is for fractionating some of a powder falling in a chute, and includes: a screw conveyor passing through the chute, a part of a casing opening inside the chute, and receiving part of the powder from the opening; and a collision separation member, which is mounted above the screw conveyor in the chute, for colliding with an object when an object of a predetermined size or larger falls, and preventing the object from falling directly onto the screw conveyor to cause clogging

With the present invention, even if some of a powder like a cement raw material falling in the chute becomes a large block due to aggregation, the collision separation member can crush or divide the large block into pieces, so that desired fractionating can be performed while preventing breakage or clogging of the screw conveyor.

In the above fractionating device, an end of a discharging port side of the screw conveyor may be positioned above another end, and an inclination angle of a rotation shaft of the screw conveyor with respect to a horizontal plane can be 5°or more and 20° or less. With this construction, even if powder passes through due to flushing between an inner wall of the screw conveyor and a screw, the powder that has passed can be returned on a reception side of the screw conveyor, which prevents a powder exceeding desired amount from being fractionated.

In the above fractionating device, a guide member for guiding the powder falling in the chute in a direction of the opening of the screw conveyor, which allows a predetermined amount of powder to stably be obtained.

In the above fractionating device, rotation speed of a rotation shaft of the screw conveyor can be variable, which enables easy control of powder amount fractionated.

The above fractionating device may further include a cooling water passage formed in the rotation shaft of the screw conveyor, and means, positioned outside the chute, for feeding a cooling water to the cooling water passage. With this, the powder can be fractionated while preventing breakage of the screw under high temperature environment.

### EFFECTS OF THE INVENTION

As described above, with the present invention, it becomes possible to stably fractionate powders such as cement raw materials by a simple construction.

### BRIEF DESCRIPTION OF THE DRAWINGS

[Figure 1] A partially sectional front view showing a fractionating device according to an embodiment of the present invention.
[Figure 2] An A-A line arrow view in Fig. 1.
[Figure 3] A B-B line arrow view in Fig. 1.

### MODE FOR CARRYING OUT THE INVENTION

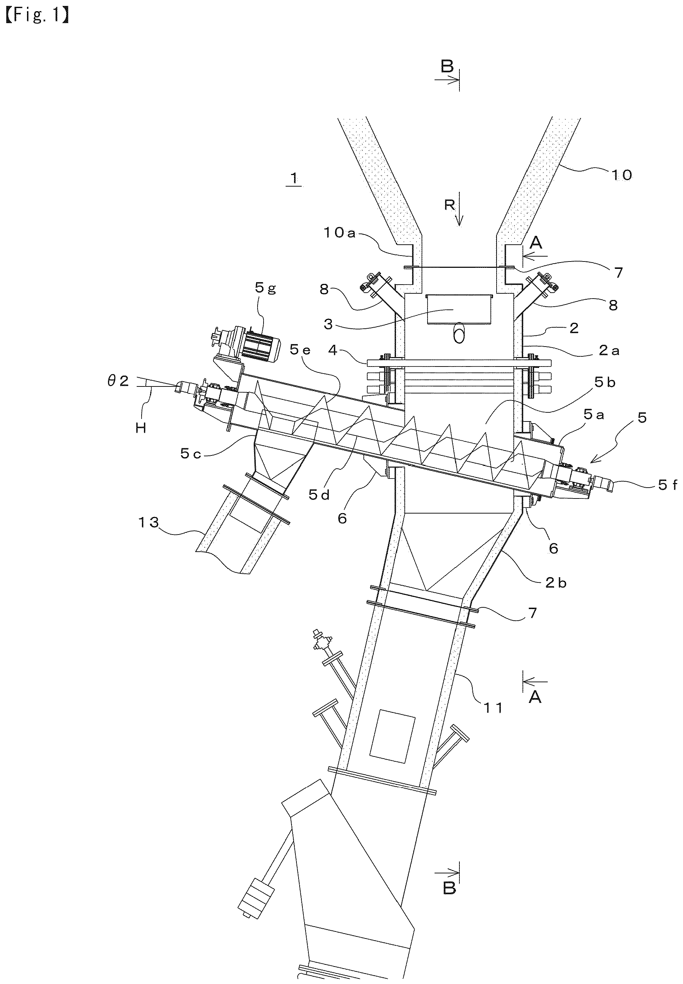

Next, embodiments of the present invention will be explained with referenced to Figs. 1 to 3 in detail. In the following explanation, as an embodiment, a fractionating device according to the present invention is used for a cement raw material (hereinafter abbreviated as "raw material") that is discharged from a preheater cyclone of a cement burning apparatus.

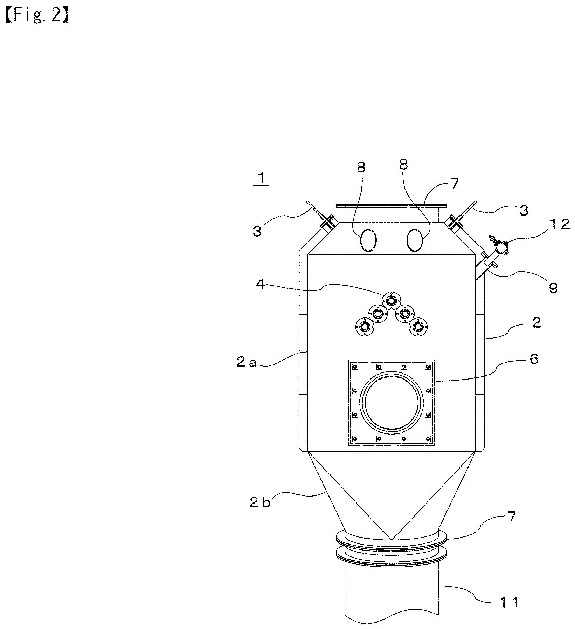

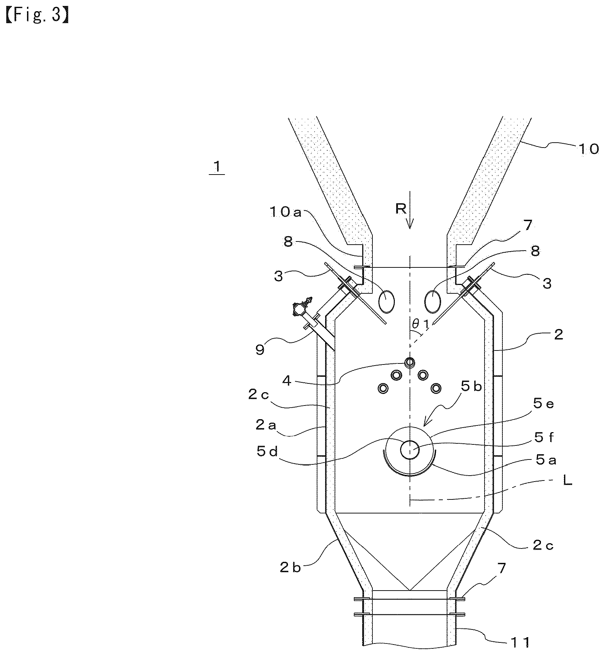

The fractionating device 1 according to the present invention includes: a raw material outlet 10a of a cyclone (third cyclone from the bottom, for instance) 10 of a preheater; a main body (chute) 2 coupled between the cyclone 10 and a raw material chute 11; guide boards 3 obliquely and downwardly penetrating an upper portion 2a of the main body 2; collision separation rods 4 horizontally penetrating the main body 2 below the guide boards 3; a screw conveyor 5 held by a holding member 6 and obliquely penetrating the main body 2 below the collision separation rods 4; and the like. To simplify drawings, the screw conveyor 5 is omitted in Fig. 2, and the screw conveyor 5 is horizontally illustrated in Fig. 3.

The main body 2 is coupled through a flange 7 between the raw material outlet 10a of the cyclone 10 and the raw material chute 11, and includes the upper portion 2a with a rectangular cylindrical shape located just below the raw material outlet 10a, and a lower portion 2b with rounded corners located just above the raw material chute 11 with a cylindrical shape. On the top of the upper portion 2a are formed cleaning ports 8 and a pressure measuring port 9. The cleaning ports 8 are openable and closable, and are used in case that a raw material R adhere to an inner wall of the main body 2 or the screw conveyor 5. Into the pressure measuring port 9 is inserted a pressure gauge 12. On the inner wall of the main body 2 is disposed a refractory 2c.

The guide board 3 is formed in a rectangular shape. As shown in Fig. 3, two guide boards 3 separately penetrate the top of the upper portion 2a of the main body 2 from the left side and the right side, and the angle θ1 between the guide board 3 and the axis L of the upper portion 2a of the main body 2 is set to 40° or less, and the guide boards 3 guide the raw material R falling from the raw material outlet 10a toward the screw conveyor 5 that penetrates the upper portion 2a of the main body 2. The guide boards 3 are supported by the main body 2 in such a manner that insertion lengths into the main body 2 are variable, and when the raw material R falling from the raw material outlet 10a is guided to a receiving port 5b of the screw conveyor 5 without the guide boards 3, the guide boards 3 are not required.

The collision separation rod 4 has a round cross section, and five collision separation rods 4 horizontally penetrate a central portion of the upper portion 2a of the main body 2. As clearly shown in Figs. 2 and 3, the collision separation rods 4 are symmetrically arranged in a mountain like shape about the central collision separation rod 4. These collision separation rods 4 can crush large blocks falling from the raw material outlet 10a and prevent the large blocks from directly falling on the screw conveyor 5, which avoids breakage of the screw conveyor 5. Each collision separation rod 4 is extractably and insetably supported by the main body 2, and the number of the inserted collision separation rods 4 can be changed.

The screw conveyor 5 is composed of: a casing 5a with a cylindrical shape including the receiving port 5b and a discharging port 5c; a rotation shaft 5d; a screw 5e fixed to the rotation shaft 5d; a motor 5g for controlling rotation speed of the rotation shaft 5d; and a cooling water passage 5f extending in the rotation shaft 5d over the overall length thereof. The receiving port 5b is an opening that is formed by removing the upper half of the casing 5a. An end portion on the discharging port 5c side of the rotation shaft 5d of the screw conveyor 5 locates above another end, and the rotation shaft 5d inclines from 5° to 20° (angle θ2) with respect to the horizontal plane H.

Next, action of the fractionating device 1 with the above construction will be explained with reference to Fig. 1.

A part of the raw material R falling from the raw material outlet 10a of the cyclone 10 is introduced to the receiving port 5b of the screw conveyor 5, through the guide boards 3 and the collision separation rods 4 penetrating the main body 2 of the fractionating device 1, directly as they are or after crushed by the collision separation rods 4, and then enters in the casing 5a. The raw material R entering in the casing 5a is accommodated in a space formed between the inner wall of the casing 5a and the screw 5e; moves leftward by the rotation of the screw 5e; and finally discharged from the discharging port 5c on a fractionating chute 13 side. The raw material R that is not fractionated by the fractionating device 1 is supplied to lower cyclones and the like from the raw material chute 11.

The raw material R is small in particle size and has considerably high fluidity, so that the raw material R sometimes tries to pass through between the inner wall of the casing 5a and the screw 5e of the screw conveyor 5 to rapidly move in the casing 5a toward the discharging port 5c. However, as described above, since the screw conveyor 5 is inclined in such a manner that the discharging port 5c is higher than the receiving port 5b, rapid movement of the raw material R toward the discharging port 5c of the casing 5a is prevented, which prevents larger amount of cement raw material R exceeding desired amount from being discharged from the discharging port 5c.

In order to control the amount of fractionated raw material R, position of the guide board 3 is adjusted or rotation speed of the motor 5g of the screw conveyor 5, that is, rotation speed of the rotation shaft 5d is adjusted.

When inner temperature of the main body 2 is high, a cooling water is fed to the cooling water passage 5f of the rotation shaft 5d from outside of the main body 2 to protect the rotation shaft 5d.

In addition, the main body 2 of the fractionating device 1 can be coupled between the raw material outlet 10a of the cyclone 10 and the raw material chute 11 though the flange 7, so that the fractionating device 1 can be installed to an existing facility with ease. Further, through the flange 7, the main body 2 can be removed from the raw material outlet 10a and the raw material chute 11, and the fractionating chute 13 can be removed from the discharging port 5c. As a result, an overall fractionating device 1 can be removed, which enables easy maintenance.

In the above embodiment, two rectangular guide boards 3 are mounted, the shape and the number of the rectangular guide boards 3, and the angle θ1 between the rectangular guide boards 3 and the axis L of the upper portion 2a of the main body 2 are appropriately changeable in accordance with installation location of the fractionating device 1, the direction that the raw material R flows and so on.

The cross section of the collision separation rod 4 is not limited to a round shape also, a rectangular cross section may be adopted. And, the number and installation location of the collision separation rods 4 can be appropriately changed. Provided that the collision separation rod 4 is able to crush large blocks falling from the raw material outlet 10a to prevent damage of the screw conveyor 5, the collision separation rod 4 is not limited to a rod shape but a plate shape with openings may be adopted for instance.

Further, although a cement raw material that is discharged from a preheater cyclone of a cement burning apparatus is exemplarily fractionated, not only to the cement raw material but also to powders falling in chutes is applied the fractionating device of the present invention, especially preferable to powders with high fluidity and easily becoming large blocks due to aggregation.

### DESCRIPTION OF THE REFERENCE NUMERALS

1 fractionating device
2 main body
2a upper portion
2b lower portion
2c refractory
3 guide board
4 collision separation rod
5 screw conveyor
5a casing
5b receiving port
5c discharging port
5d rotation shaft
5e screw
5f cooling water passage
5g motor
6 holding member
7 flange
8 cleaning port
9 pressure measuring port
10 cyclone
10a raw material outlet
11 raw material chute
12 pressure gauge
13 fractionating chute
R raw material

## Claims

1. A fractionating device for fractionating some of a powder falling in a chute, comprising:
a screw conveyor passing through the chute, a part of a casing opening inside the chute, and receiving part of the powder from the opening; and
a collision and crushing member, which is mounted above the screw conveyor in the chute, for colliding with an object when an object which is a block of the powder and of a predetermined size or larger falls, and preventing the object from falling directly onto the screw conveyor,
wherein rotation speed of a rotation shaft of the screw conveyor is variable.

2. The fractionating device as claimed in claim 1, wherein an end of a discharging port side of the screw conveyor is positioned above another end, and an inclination angle of a rotation shaft of the screw conveyor with respect to a horizontal plane is 5°or more and 20°or less.

3. The fractionating device as claimed in claim 1 or 2, further comprising a guide member for guiding the powder falling in the chute in a direction of the opening of the screw conveyor.

4. The fractionating device as claimed in one of claims 1, 2 or 3, further comprising a cooling water passage formed in the rotation shaft of the screw conveyor, and means, positioned outside the chute, for feeding a cooling water to the cooling water passage.

## Patentansprüche

1. Fraktionierungsvorrichtung zum Fraktionieren eines Teils eines Pulvers, das in eine Rutsche fällt, umfassend:
eine Schneckenfördereinrichtung, die durch die Rutsche verläuft, wobei ein Teil eines Gehäuses in die Rutsche öffnet und einen Teil des Pulvers aus der Öffnung aufnimmt; und
ein Prall- und Zerkleinerungselement, das oberhalb der Schneckenfördereinrichtung in der Rutsche montiert ist, zum Aufprallen eines Objekts, wenn ein Objekt, das ein Block des Pulvers ist und eine vorbestimmte Größe oder größer aufweist, herunterfällt, und zum Verhindern, dass das Objekt direkt auf die Schneckenfördereinrichtung fällt,
wobei eine Drehzahl einer Drehwelle der Schneckenfördereinrichtung variabel ist.

2. Fraktionierungsvorrichtung nach Anspruch 1, wobei ein Ende der Auslassöffnungseite der Schneckenfördereinrichtung über einem anderen Ende positioniert ist und ein Neigungswinkel einer Drehwelle der Schneckenfördereinrichtung in Bezug auf eine horizontale Ebene 5° oder mehr und 20° oder weniger beträgt.

3. Fraktioniervorrichtung nach Anspruch 1 oder 2, ferner umfassend ein Führungselement zum Führen des Pulvers, das in die Rutsche fällt, in Richtung der Öffnung der Schneckenfördereinrichtung.

4. Fraktionierungsvorrichtung nach einem der Ansprüche 1, 2 oder 3, ferner umfassend einen Kühlwasserkanal, der in der Drehwelle der Schneckenfördereinrichtung gebildet ist, sowie Mittel, die außerhalb der Rutsche positioniert sind, zum Zuführen von Kühlwasser in den Kühlwasserkanal.

## Revendications

1. Dispositif de fractionnement destiné à fractionner de la poudre tombant dans une goulotte, comprenant :
un transporteur à vis sans fin traversant la goulotte, une partie d'un carter s'ouvrant à l'intérieur de la goulotte, et recevant une partie de la poudre par l'ouverture ; et
un élément de collision et d'écrasement, qui est monté au-dessus du transporteur à vis sans fin dans la goulotte, destiné à entrer en collision avec un objet lorsqu'un objet, qui est un bloc de la poudre et d'au moins une taille prédéfinie, tombe, et à empêcher l'objet de tomber directement sur le transporteur à vis sans fin,
dans lequel la vitesse de rotation d'un arbre de rotation du transporteur à vis sans fin est variable.

2. Dispositif de fractionnement selon la revendication 1, dans lequel une extrémité du côté d'orifice d'évacuation du transporteur à vis sans fin est positionnée au-dessus d'une autre extrémité, et un angle d'inclinaison d'un arbre de rotation du transporteur à vis sans fin par rapport à un plan horizontal est supérieur ou égal à 5° et inférieur ou égal à 20°.

3. Dispositif de fractionnement selon la revendication 1 ou 2, comprenant en outre un élément de guidage destiné à guider la poudre tombant dans la goulotte en direction de l'ouverture du transporteur à vis sans fin.

4. Dispositif de fractionnement selon l'une des revendications 1, 2 ou 3, comprenant en outre un passage d'eau de refroidissement formé dans l'arbre de rotation du transporteur à vis sans fin, et des moyens, positionnés en dehors de la goulotte, destinés à acheminer de l'eau de refroidissement dans le passage d'eau de refroidissement.
